(19) Europäisches Patentamt
European Patent Office
Office européen des brevets

(11) **EP 2 192 697 B1**

(12) **EUROPEAN PATENT SPECIFICATION**

(45) Date of publication and mention
of the grant of the patent:
**03.10.2018  Bulletin 2018/40**

(51) Int Cl.:
**H04B 7/06** *(2006.01)*   **H04L 1/06** *(2006.01)*

(21) Application number: **07855837.6**

(22) Date of filing: **27.12.2007**

(86) International application number:
**PCT/CN2007/003836**

(87) International publication number:
**WO 2009/030082 (12.03.2009 Gazette 2009/11)**

(54) **A METHOD FOR TRANSMITTING DIVERSITY OF WIRELESS COMMUNICATION SYSTEM**

VERFAHREN FÜR SENDEDIVERSITÄT EINES DRAHTLOSEN KOMMUNIKATIONSSYSTEMS

PROCÉDÉ D'ÉMISSION EN DIVERSITÉ POUR UN SYSTÈME DE COMMUNICATION SANS FIL

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **07.09.2007  CN 200710145950**

(43) Date of publication of application:
**02.06.2010  Bulletin 2010/22**

(73) Proprietor: ZTE Corporation
**Shenzhen city, Guangdong 518057 (CN)**

(72) Inventors:
• **LI, Yong**
**Guangdong 518057 (CN)**
• **YU, Guanghui**
**Guangdong 518057 (CN)**
• **YUAN, Liuqing**
**Guangdong 518057 (CN)**

(74) Representative: **Schröer, Gernot H. et al
Meissner Bolte Patentanwälte
Rechtsanwälte Partnerschaft mbB
Bankgasse 3
90402 Nürnberg (DE)**

(56) References cited:
**EP-A1- 1 679 816        WO-A1-2006/025635
CN-A- 1 348 642        CN-A- 1 623 293**

US-A1- 2006 291 544

• **J-K KIM ET AL: "A New Hybrid Space-Time Block
Codes and Spatial Multiplexing Scheme with
Precoding", PROCEEDINGS OF THE 2007 IEEE
INTERNATIONAL CONFERENCE ON
COMMUNICATIONS (ICC 2007), 24-28 JUNE 2007,
GLASGOW, UK, IEEE, PISCATAWAY, NJ, USA, 1
June 2007 (2007-06-01), pages 5276-5281,
XP031126506, ISBN: 978-1-4244-0353-0**
• **SAMSUNG ET AL: "Way Forward on 4-Tx
Codebook for dual polarized SU-MIMO", 3GPP
DRAFT; R1-073201, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. RAN WG1, no. Orlando,
USA; 20070702, 2 July 2007 (2007-07-02),
XP050106835, [retrieved on 2007-07-02]**
• **SAMSUNG: "MIMO precoding for E-UTRA
Downlink", 3GPP DRAFT; R1-070944, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. St. Louis,
USA; 20070206, 6 February 2007 (2007-02-06),
XP050104953, [retrieved on 2007-02-06]**
• **NORTEL: "DL 4x2 Rate 1 Double STTD schemes
comparison", 3GPP DRAFT; R1-060148, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. Helsinki,
Finland; 20060123, 19 January 2006 (2006-01-19),
XP050417509, [retrieved on 2006-01-19]**

EP 2 192 697 B1

**Description**

Technical Field

The present invention relates to the wireless communication field, and more especially, to a method for transmit diversity in the wireless communication system.

Background of the Related Art

In the wireless communication system, the signal received at the receiving terminal is a degraded signal with noise due to the complexity of the wireless channel, and the signal to noise ratio of the signal is a stochastic process. Under the condition of applying a single antenna to transmit, the receiving effect is poor and the channel link is unreliable when the SNR becomes relatively low; when applying multiple antennas to transmit diversely, what is received at the receiving terminal is the multi-channel same signal, since the probability that the SNR of the multi-channel same signal becomes lower will be smaller than that of the single-channel signal transmitted by a single antenna, the link reliability is improved, which means that the diversity gain is acquired.

Generally, the process of diversity transmission is as follows: the to-be-transmitted binary signals are modulated into the symbols (complex), and the to-be-transmitted symbols are encoded in diversity in the space-time-frequency domain to obtain the diversity encoding blocks, and then the symbols in the diversity encoding block are assigned to different antennas to transmit. Generally, each space-time-frequency resource unit in the diversity encoding block has only one to-be-transmitted symbol.

The diversity methods used frequently in the wireless communication system are mainly: TSTD (Time Switch Transmission Diversity), FSTD (Frequency Switch Transmission Diversity), STBC (Spatial Time Block Code), SFBC (Spatial Frequency Block Code), CDD (Cyclic Delay Diversity), and their combinations. Wherein, the LTE (Long Term Evolution) standard of the 3GPP (3rd Generation Partnership Project) takes the SFBC as the diversity method with two antennas, and the combination of SFBC and FSTD with four antennas; in the subsequent versions, the diversity method with more than four antennas might be used; in the B3G (Beyond 3rd Generation), 4G (4th Generation) standards proposed by other standard organizations, the technology of multi-antenna diversity is listed in technologies to be applied.

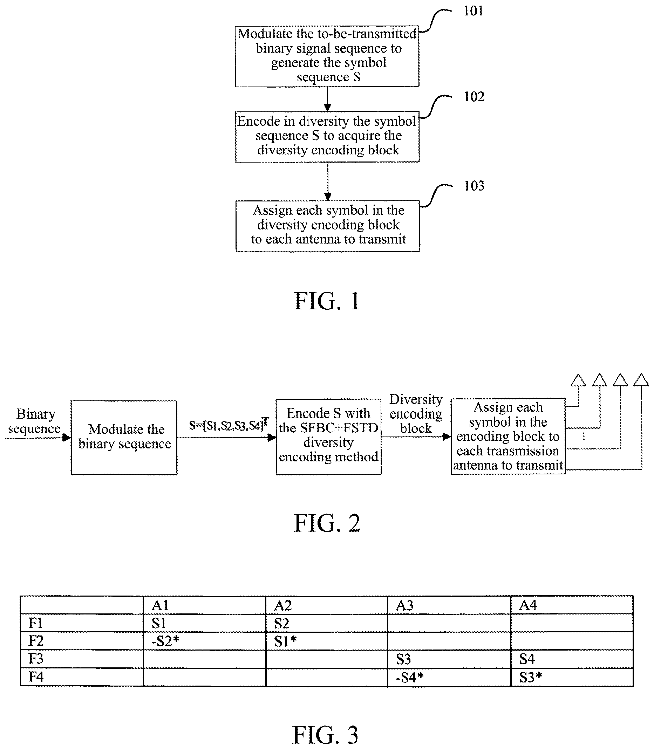

FIG. 1 is a flow chart of the method for transmit diversity in the prior art. As shown in FIG. 1, the method comprises the following steps:

101: Modulate the to-be-transmitted binary signal sequence to the symbol sequence S; suppose the number of to-be-transmitted symbols is N, then the symbol sequence may be denoted as the vector $S=[S_1, S_2,...,S_N]^T$, where T denotes the matrix transpose;

102: Apply a certain diversity encoding method to encode the to-be-transmitted symbol sequence S to acquire the diversity encoding block;

103: Distribute each symbol in the diversity encoding block to each antenna to transmit.

FIG. 2 is an illustration of applying the SFBC+FSTD diversity encoding to a wireless communication system with four transmission antennas in the prior art.

FIG. 3 is an illustration of the SFBC+FSTD encoding method.

Taking the open-loop transmission diversity in the 3GPP LTE as an example, in the LTE, when there are four transmission antennas, the SFBC+FSTD diversity encoding method is used, supposing the to-be-transmitted modulated symbol sequence is $S=[S_1,S_2,S_3,S_4]^T$, the symbol sequence is encoded in SFBC+FSTD diversity, and then each symbol in the acquired diversity encoding block is assigned to the four transmission antennas to transmit.

Where, A1, A2, A3 and A4 denote different antennas; F1, F2, F3 and F4 denote different sub-carriers; * denotes the matrix conjugation. From FIG. 3, it can be seen that each symbol in the to-be-transmitted symbol sequence S is transmitted only at two antennas, and only at two frequency resource units (sub-carriers). It means that each symbol in S can only acquire the gain of two antennas and also two frequency units.

That is to say, applying the SFBC+FSTD or STBC+TSTD to a wireless communication system with more than two transmission antennas has the following disadvantages: each to-be-transmitted symbol can only acquire the gain of two instead of all antennas; and each symbol can only acquire the gain of two instead of all resource units in the frequency (time) resource occupied by the encoding block. In fact, other diversity methods, such as TSTD and FSTD, their transmission encoding blocks can acquire the gain of each antenna in overall; for each to-be-transmitted symbol, however, the gain of only one antenna instead of all antennas can be acquired. That is, these methods cannot acquire the transmission gain of each antenna. The combination of these diversity methods with others has the similar problem.

An example of prior art method is described in D1 J-K KIM ET AL: "A New Hybrid Space-Time Block Codes and Spatial Multiplexing Scheme with Precoding", PROCEEDINGS OF THE 2007 IEEE INTERNATIONAL CONFERFRENCE ON COMMUNICATIONS (ICC 2007), 24-28 JUNE 2007, GLASGOW, UK, IEEE, PISCATAWAY, NJ, USA, 1 June 2007 (2007-06-01), pages 5276-5281, ISBN: 978-1-4244-0353-0, and relevant technologies are also known from EP 1679816 A1 (SAMSUNG ELECTRONICS CO LTD [KR]) 12 July 2006 (2006-07-12), and US 2006/291544 A1 (FISCHER MATTHEW J [US] ET AL FISCHER MATTHEW JAMES [US] ET AL) 28 December 2006 (2006-12-28), SAMSUNG ET AL: "Way Forward on 4-Tx Codebook for dual polarized SU-MIMO", 3GPP DRAFT; R1-073201, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol RAN WG1, no. Orlando, USA; 20070702, 2 July 2007 (2007-07-02), SAMSUNG: "MIMO precoding for E-UTRADowlink", 3GPP DRAFT; R1-070944, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. St. Louis, USA; 20070206, 6 February 2007 (2007-02-06), and NORTEL: "Dl 4*2 Rate 1 Double STTD schemes comparison", 3GPP DRAFT; R1-060148, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WAG1, no. Helsinki, Finland; 20060123, 19 January 2006 (2006-01-19).

## Summary of the Invention

The present invention provides a method for increasing the transmission diversity gain in the wireless communication systems with more than two transmission antennas to overcome the shortcomings in the prior art as defined in the independent claim.

In order to solve the above problem, provided is a method for transmit diversity in a wireless communication system, and the method comprises the following steps of:

A: modulating a to-be-transmitted signal sequence to generate a symbol sequence S, multiplying a vector composing of n symbols sequentially selected from the S by a transformation matrix A to acquire a transformation sequence X; and
B: encoding in diversity the X to generate a diversity encoding block, assigning symbols in the diversity encoding block to each transmission antenna to transmit;

wherein the transformation matrix A is a n-order invertible matrix whose main diagonal elements are not zero, and the number of non zero elements in each column is more than one; where n is the number of the transmission antennas.

Moreover, said transformation matrix A is a unitary matrix, or a unitary matrix multiplied by a non-zero coefficient k.

Moreover, said transformation matrix A is a product of several Givens matrices or a product of several Givens matrices and a non-zero coefficient k.

Moreover, when n=4, said transformation matrix A is a product of two Givens matrices or a product of two Givens matrices and a non-zero coefficient k; when n=6, the transformation matrix A is a product of six Givens matrices or a product of six Givens matrices and a non-zero coefficient k; and when n=8, the transformation matrix A is a product of eight Givens matrices or a product of eight Givens matrices and a non-zero coefficient k.

Moreover, a rotation degree of said Givens matrix is $\pi/4$.

Moreover, any column $A_j$ in said transformation matrix A satisfies the following condition: at least one of the $i^{th}$ and $(i+1)^{th}$ elements in $A_j$ is not zero, where i=1,3,...,2m+1, m=n/2-1, and n is even.

Moreover, a modulus of each non-zero element in the same column in said transformation matrix A is the same.

Moreover, a modulus of each non-zero element in said transformation matrix A is the same.

Moreover, each non-zero element in said transform matrix A has a value in a range of {kl,-kl}, and kl is not zero.

Moreover, said transformation matrix A is represented as kl $\times$ T; where, kl is a non-zero coefficient, and T is a matrix whose non-zero elements are 1 or -1.

Moreover, said transformation matrix A is a unitary matrix, and when n=4:

$$A = \frac{\sqrt{2}}{2} \times \begin{bmatrix} 1 & 0 & -1 & 0 \\ 0 & 1 & 0 & -1 \\ 1 & 0 & 1 & 0 \\ 0 & 1 & 0 & 1 \end{bmatrix}$$

Moreover, said transformation matrix A is a unitary matrix, and when n=6:

$$A = \frac{1}{2} \times \begin{bmatrix} 1 & 0 & -1 & -1 & 0 & -1 \\ 0 & 1 & -1 & 0 & -1 & 1 \\ 0 & 1 & 1 & 0 & -1 & -1 \\ 1 & -1 & 0 & 1 & -1 & 0 \\ 1 & 1 & 0 & 1 & 1 & 0 \\ 1 & 0 & 1 & -1 & 0 & 1 \end{bmatrix} \quad \text{or} \quad A = \frac{1}{2} \times \begin{bmatrix} 1 & -1 & 0 & -1 & -1 & 0 \\ 0 & 1 & -1 & 0 & -1 & 1 \\ 0 & 1 & 1 & 0 & -1 & -1 \\ 1 & 0 & -1 & 1 & 0 & -1 \\ 1 & 1 & 0 & -1 & 1 & 0 \\ 1 & 0 & 1 & 1 & 0 & 1 \end{bmatrix}$$

Moreover, said transformation matrix A is a unitary matrix, and when n=8:

$$A = \frac{1}{2} \times \begin{bmatrix} 1 & 0 & -1 & 0 & -1 & 0 & 1 & 0 \\ 0 & 1 & 0 & -1 & 0 & -1 & 0 & 1 \\ 1 & 0 & 1 & 0 & -1 & 0 & -1 & 0 \\ 0 & 1 & 0 & 1 & 0 & -1 & 0 & -1 \\ 1 & 0 & -1 & 0 & 1 & 0 & -1 & 0 \\ 0 & 1 & 0 & -1 & 0 & 1 & 0 & -1 \\ 1 & 0 & 1 & 0 & 1 & 0 & 1 & 0 \\ 0 & 1 & 0 & 1 & 0 & 1 & 0 & 1 \end{bmatrix}$$

Moreover, said diversity encoding is SFBC+FSTD diversity encoding, STBC+TSTD diversity encoding, TSTD diversity encoding, or FSTD diversity encoding.

Moreover, said transformation matrix A is obtained by transforming a discrete Fourier transformation matrix or by transforming a discrete Fourier transformation matrix and multiplying a non-zero coefficient k.

The enhanced transmission diversity technology in the present invention can work together with any transmission diversity method (transmission diversity encoding method). The present invention can make each symbol which uses the diversity method to transmit acquire higher diversity gain, thus improves the quality of the transmission link.

Brief Description of Drawings

FIG. 1 is a flow chart of the method for transmit diversity in the prior art;
FIG. 2 is an illustration of applying the SFBC+FSTD diversity encoding to a wireless communication system with four transmission antennas in the prior art;
FIG. 3 is an illustration of the SFBC+FSTD encoding method;

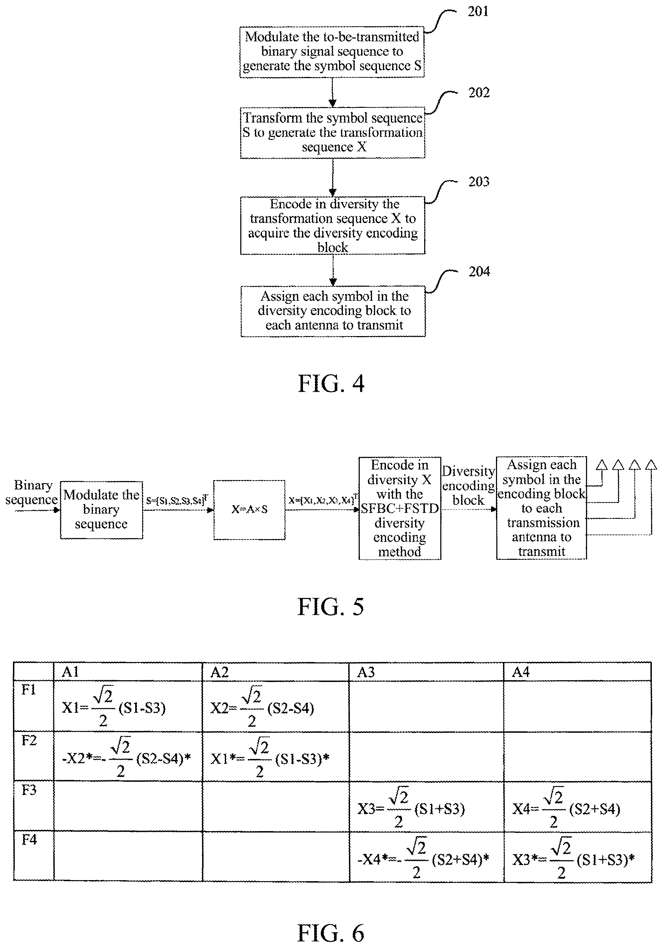

FIG. 4 is a flow chart of the method for transmit diversity in the wireless communication system in accordance with an embodiment of the present invention;
FIG. 5 is an illustration of diversity transmission applying the method of the present invention to a wireless communication system with four transmission antennas and also applying the SFBC+FSTD diversity encoding;
FIG. 6 is an illustration of the encoding method combining the transformation method of the present invention with the SFBC+FSTD diversity encoding method.

Preferred Embodiments of the Present Invention

The basic train of thought of the present invention is, multiplying the modulated symbol sequence S by an invertible matrix whose main diagonal elements are not zero and in which the number of non-zero elements in each column is more than one to acquire the transformation sequence X, encoding in diversity X to acquire the diversity encoding block, and assigning each symbol in the diversity encoding block to each antenna to transmit.

The present invention will be described in detail in the following in conjunction with the accompanying figures and the embodiments.

FIG. 4 is a flow chart of the method for transmit diversity in the wireless communication system in accordance with an embodiment of the present invention. As shown in FIG. 4, the method comprises the following steps:

201: At the transmitting terminal, the to-be-transmitted binary signal sequence is modulated to generate the symbol sequence S;
202: Transform the modulated and to-be-transmitted symbol sequence S to generate the transformation sequence X, make each symbol in the to-be-transmitted symbol sequence S exist in each space resource unit, each frequency resource unit and each time resource unit occupied by the diversity encoding block.

Suppose the to-be-transmitted symbol sequence S has N symbols, denoted as $S=[S_1,S_2,...,S_N]^T$. Transform the to-be-transmitted symbol vector S to acquire the transformation sequence $X=[X_1,X_2,...,X_N]^T$.

There are many transformation methods satisfying the above condition, for example, a matrix constructed based on the Givens matrix or the DFT (Discrete Fourier Transform) can achieve this point apparently. That is, it can be obtained by multiplying several basic Givens matrices.

203: Encodes in diversity the transformation sequence X to obtain the diversity encoding block;

The diversity encoding method selected here can be any diversity encoding method rather than only those mentioned in this specification. In other words, the present invention can work together with any diversity encoding method. The present invention can play its role to increase the gain as long as the method has the following disadvantages:

This diversity encoding method cannot guarantee that each to-be-transmitted symbol can obtain the gain of each frequency unit, each space unit or each time unit occupied by the diversity encoding block.

204: Assign each symbol in the diversity encoding block to each transmission antenna to transmit.

The transformation method in step 202 will be described in detail in conjunction with the accompanying figures and embodiments.

FIG. 5 is an illustration of diversity transmission applying the method of the present invention to a wireless communication system with four transmission antennas and applying the SFBC+FSTD diversity encoding.

FIG. 6 is an illustration of the encoding method combining the transformation method of the present invention with the SFBC+FSTD diversity encoding method.

As shown in FIG. 5, modulate the to-be-transmitted binary sequence to generate the symbol sequence S, transform S by $X=A \times S$ to obtain the transformation sequence X, and encode in diversity the transformation sequence X according to the general SFBC+FSTD method, and then assign the symbols in the diversity encoding block to each antenna to transmit.

That is, matrix product is applied to transform the symbol sequence S. When the number of transmission antennas is 4, the transformation matrix A is a $4\times4$ square matrix, and this matrix might be chosen as a unitary matrix (the energy of the symbol vector will not change after the matrix transformation) or the product of a unitary matrix and a non-zero coefficient in order to perform inverse transformation conveniently in the demodulation at the receiving terminal.

When using four transmission antennas, the symbol sequence S is multiplied by the transformation matrix A to obtain the transformation sequence X.

To simplify the description, suppose $S=[S_1,S_2,S_3,S_4]^T$, $X=[X_1,X_2,X_3,X_4]^T$, and

$$A = k \times \frac{\sqrt{2}}{2} \begin{bmatrix} 1 & 0 & -1 & 0 \\ 0 & 1 & 0 & -1 \\ 1 & 0 & 1 & 0 \\ 0 & 1 & 0 & 1 \end{bmatrix} = \frac{\sqrt{2}}{2} \begin{bmatrix} 1 & 0 & -1 & 0 \\ 0 & 1 & 0 & -1 \\ 1 & 0 & 1 & 0 \\ 0 & 1 & 0 & 1 \end{bmatrix};$$

that is:

$$X = A \times S = \frac{\sqrt{2}}{2} \begin{bmatrix} 1 & 0 & -1 & 0 \\ 0 & 1 & 0 & -1 \\ 1 & 0 & 1 & 0 \\ 0 & 1 & 0 & 1 \end{bmatrix} \times \begin{bmatrix} S_1 \\ S_2 \\ S_3 \\ S_4 \end{bmatrix} = \begin{bmatrix} X_1 \\ X_2 \\ X_3 \\ X_4 \end{bmatrix}.$$

From FIG. 6, it can be seen that after the transformation, each symbol in the symbol sequence S is included in the several symbols in the X sequence; each symbol in S can be transmitted at each antenna or at each frequency resource unit. Therefore, each symbol in S can obtain the gain of all transmission antennas and the gain of all transmission frequency resource units.

In the above example, k=1 or another non-zero value is chosen.

The above A is the product of two Givens matrices of B1 and B2;

$$B1 = \begin{bmatrix} Cos(\theta) & 0 & -Sin(\theta) & 0 \\ 0 & 1 & 0 & 0 \\ Sin(\theta) & 0 & Cos(\theta) & 0 \\ 0 & 0 & 0 & 1 \end{bmatrix}$$

$$B2 = \begin{bmatrix} 1 & 0 & 0 & 0 \\ 0 & Cos(\theta) & 0 & -Sin(\theta) \\ 0 & 0 & 1 & 0 \\ 0 & Sin(\theta) & 0 & Cos(\theta) \end{bmatrix}$$

That is, **A=B1 $\times$ B2**, where $\theta = \pi/4$.

Under the condition that there are six transmission antennas, applying the SFBC+FSTD diversity encoding, the symbol sequence S which is generated by modulating the binary sequence to be transmitted is denoted as $[S_1,S_2,S_3,S_4,S_5,S_6]^T$; the transformation sequence $X=[X_1,X_2,X_3,X_4,X_5,X_6]^T$ is obtained after the transformation of $X=A\times S$; the transformation sequence X is decoded in diversity according to the SFBC+FSTD method; and the symbols in the diversity encoding block are assigned to each antenna to transmit. Here, A is a $6\times6$ unitary matrix, and it may be: example 1:

$$A = k \times \frac{1}{2}\begin{bmatrix} 1 & 0 & -1 & -1 & 0 & -1 \\ 0 & 1 & -1 & 0 & -1 & 1 \\ 0 & 1 & 1 & 0 & -1 & -1 \\ 1 & -1 & 0 & 1 & -1 & 0 \\ 1 & 1 & 0 & 1 & 1 & 0 \\ 1 & 0 & 1 & -1 & 0 & 1 \end{bmatrix} = \frac{1}{2}\begin{bmatrix} 1 & 0 & -1 & -1 & 0 & -1 \\ 0 & 1 & -1 & 0 & -1 & 1 \\ 0 & 1 & 1 & 0 & -1 & -1 \\ 1 & -1 & 0 & 1 & -1 & 0 \\ 1 & 1 & 0 & 1 & 1 & 0 \\ 1 & 0 & 1 & -1 & 0 & 1 \end{bmatrix};$$

or example 2:

$$A = k \times \frac{1}{2}\begin{bmatrix} 1 & -1 & 0 & -1 & -1 & 0 \\ 0 & 1 & -1 & 0 & -1 & 1 \\ 0 & 1 & 1 & 0 & -1 & -1 \\ 1 & 0 & -1 & 1 & 0 & -1 \\ 1 & 1 & 0 & -1 & 1 & 0 \\ 1 & 0 & 1 & 1 & 0 & 1 \end{bmatrix} = \frac{1}{2}\begin{bmatrix} 1 & -1 & 0 & -1 & -1 & 0 \\ 0 & 1 & -1 & 0 & -1 & 1 \\ 0 & 1 & 1 & 0 & -1 & -1 \\ 1 & 0 & -1 & 1 & 0 & -1 \\ 1 & 1 & 0 & -1 & 1 & 0 \\ 1 & 0 & 1 & 1 & 0 & 1 \end{bmatrix}.$$

Similarly, k=1 or another non-zero value is chosen.

The above A is the product of six Givens matrices C1, C2, C3, C4, C5 and C6; taking example 1 as an example, C1, C2, C3, C4, C5 and C6 are respectively:

$$C1 = \begin{bmatrix} \cos(\theta) & 0 & 0 & -\sin(\theta) & 0 & 0 \\ 0 & 1 & 0 & 0 & 0 & 0 \\ 0 & 0 & 1 & 0 & 0 & 0 \\ \sin(\theta) & 0 & 0 & \cos(\theta) & 0 & 0 \\ 0 & 0 & 0 & 0 & 1 & 0 \\ 0 & 0 & 0 & 0 & 0 & 1 \end{bmatrix}; \quad C2 = \begin{bmatrix} 1 & 0 & 0 & 0 & 0 & 0 \\ 0 & \cos(\theta) & 0 & 0 & -\sin(\theta) & 0 \\ 0 & 0 & 1 & 0 & 0 & 0 \\ 0 & 0 & 0 & 1 & 0 & 0 \\ 0 & \sin(\theta) & 0 & 0 & \cos(\theta) & 0 \\ 0 & 0 & 0 & 0 & 0 & 1 \end{bmatrix}$$

$$C3 = \begin{bmatrix} 1 & 0 & 0 & 0 & 0 & 0 \\ 0 & 1 & 0 & 0 & 0 & 0 \\ 0 & 0 & \cos(\theta) & 0 & 0 & -\sin(\theta) \\ 0 & 0 & 0 & 1 & 0 & 0 \\ 0 & 0 & 0 & 0 & 1 & 0 \\ 0 & 0 & \sin(\theta) & 0 & 0 & \cos(\theta) \end{bmatrix}; \quad C4 = \begin{bmatrix} \cos(\theta) & 0 & 0 & 0 & 0 & -\sin(\theta) \\ 0 & 1 & 0 & 0 & 0 & 0 \\ 0 & 0 & 1 & 0 & 0 & 0 \\ 0 & 0 & 0 & 1 & 0 & 0 \\ 0 & 0 & 0 & 0 & 1 & 0 \\ \sin(\theta) & 0 & 0 & 0 & 0 & \cos(\theta) \end{bmatrix}$$

$$C5 = \begin{bmatrix} 1 & 0 & 0 & 0 & 0 & 0 \\ 0 & 1 & 0 & 0 & 0 & 0 \\ 0 & 0 & 1 & 0 & 0 & 0 \\ 0 & 0 & 0 & \cos(\theta) & -\sin(\theta) & 0 \\ 0 & 0 & 0 & \sin(\theta) & \cos(\theta) & 0 \\ 0 & 0 & 0 & 0 & 0 & 1 \end{bmatrix}; \quad C6 = \begin{bmatrix} 1 & 0 & 0 & 0 & 0 & 0 \\ 0 & \cos(\theta) & -\sin(\theta) & 0 & 0 & 0 \\ 0 & \sin(\theta) & \cos(\theta) & 0 & 0 & 0 \\ 0 & 0 & 0 & 1 & 0 & 0 \\ 0 & 0 & 0 & 0 & 1 & 0 \\ 0 & 0 & 0 & 0 & 0 & 1 \end{bmatrix}.$$

That is, A=C1 × C2 × C3 × C4 × C5 × C6; where $\theta = \pi/4$.

When there are eight transmission antennas, applying the SFBC+FSTD diversity encoding, the symbol sequence S which is generated by modulating the binary sequence to be transmitted is denoted as $[S_1,S_2,S_3,S_4,S_5,S_6,S_7,S_8]^T$; the transformation sequence $X=[X_1,X_2,X_3,X_4,X_5,X_6,X_7,X_8]^T$ is obtained after the transformation of $X=A \times S$; the transformation sequence X is decoded in diversity according to the SFBC+FSTD method; and the symbols in the diversity encoding block is assigned to each antenna to transmit. Here, A is an 8×8 unitary matrix, and it might be:

$$A = k \times \frac{1}{2}\begin{bmatrix} 1 & 0 & -1 & 0 & -1 & 0 & 1 & 0 \\ 0 & 1 & 0 & -1 & 0 & -1 & 0 & 1 \\ 1 & 0 & 1 & 0 & -1 & 0 & -1 & 0 \\ 0 & 1 & 0 & 1 & 0 & -1 & 0 & -1 \\ 1 & 0 & -1 & 0 & 1 & 0 & -1 & 0 \\ 0 & 1 & 0 & -1 & 0 & 1 & 0 & -1 \\ 1 & 0 & 1 & 0 & 1 & 0 & 1 & 0 \\ 0 & 1 & 0 & 1 & 0 & 1 & 0 & 1 \end{bmatrix} = \frac{1}{2}\begin{bmatrix} 1 & 0 & -1 & 0 & -1 & 0 & 1 & 0 \\ 0 & 1 & 0 & -1 & 0 & -1 & 0 & 1 \\ 1 & 0 & 1 & 0 & -1 & 0 & -1 & 0 \\ 0 & 1 & 0 & 1 & 0 & -1 & 0 & -1 \\ 1 & 0 & -1 & 0 & 1 & 0 & -1 & 0 \\ 0 & 1 & 0 & -1 & 0 & 1 & 0 & -1 \\ 1 & 0 & 1 & 0 & 1 & 0 & 1 & 0 \\ 0 & 1 & 0 & 1 & 0 & 1 & 0 & 1 \end{bmatrix}.$$

Similarly, k=1 or another non-zero value is chosen.

The above A is the product of eight Givens matrices D1, D2, D3, D4, D5, D6, D7 and D8, and the construction principle of D1, D2, D3, D4, D5, D6, D7 and D8 is the same as the situation that the A is the product of six Givens matrices.

From the above example, it can be seen that A should satisfy the following conditions according to the basic principle of the present invention:

(1) A is an invertible matrix to make the receiving terminal obtain the symbol sequence S from the invertible matrix of A;

(2) The main diagonal elements of A are not zero;

(3) A is a n×n square matrix, n is the number of the transmission antennas;

(4) The number of non-zero elements in each column of A is more than one in order to make one element in S is included in several elements in X.

Preferably, A should be best to satisfy one or any combination of the following conditions:

a) A is the product of several Givens matrices, or obtained by simply transforming the discrete Fourier transformation matrix;

b) The modulus of the non-zero elements in the same column of A is the same to decrease the implementation complexity; in order to further decrease the complexity, the modulus of each non-zero element in A can be the same; moreover, the value of each non-zero element in A may be in the range of {d, -d} (d is a non-zero value).

c) A is a unitary matrix or the product of a unitary matrix and a non-zero coefficient;

d) Any column $A_j$ in A satisfies the following condition: at least one of the $i^{th}$ and $(i+1)^{th}$ elements in $A_j$ is not zero, i=1,3,...,2m+1; m=n/2-1, n is the order number of A, and the number of the transmission antennas as well, n is even.

Industrial Applicability

The enhanced transmit diversity technology in the present invention can work together with any transmission diversity method (transmission diversity encoding method). The present invention makes each to-be-transmitted symbol applying the diversity method obtain higher diversity gain, thus improves the transmission link quality.

**Claims**

1. A method for transmit diversity in a wireless communication system, comprising the following steps of:

   A: modulating a to-be-transmitted signal sequence to generate a symbol sequence, multiplying a vector S composing of n symbols sequentially selected from the symbol sequence by a transformation matrix A to obtain a transformation sequence X, X=A × S; and

   B: encoding in diversity the X to generate a diversity encoding block; assigning each symbol in the diversity encoding block to each transmission antenna to transmit;

   wherein the transformation matrix A is a n-order invertible matrix whose main diagonal elements are not zero, and the number of non zero elements in each column is more than one; n is the number of the transmission antennas, wherein said transformation matrix A is a product of several Givens matrices or a product of several Givens and a non-zero coefficient k,

   **characterized in that**,

   when n=4, said transformation matrix A is a product of two Givens matrices or a product of two Givens matrices and a non-zero coefficient k; when n=6, said transformation matrix A is a product of six Givens matrices or a product of six Givens matrices and a non-zero coefficient k; and when n=8, said transformation matrix A is a product of eight Givens matrices or a product of eight Givens matrices and a non-zero coefficient k.

2. The method of claim 1, wherein said transformation matrix A is a unitary matrix, or a unitary matrix multiplied by a non-zero coefficient k.

3. The method of claim 1, wherein a rotation degree of said Givens matrix is $\pi/4$.

4. The method of claim 1, wherein any column $A_j$ of said transformation matrix A satisfies the following condition: at least one of the $i^{th}$ and $(i+1)^{th}$ elements in $A_j$ is not zero, where i=1,3,..., n-1,j=1, 2, ...n, and n is even.

5. The method of claim 1, wherein a modulus of each non-zero element in the same column of said transformation matrix A is the same.

6. The method of claim 5, wherein a modulus of each non-zero element in said transformation matrix A is the same.

7. The method of claim 6, wherein each non-zero element in said transformation matrix A has a value in a range of {d,-d}, and d is a non-zero value.

8. The method of claim 7, wherein said transformation matrix A is denoted as d × T; wherein T is a matrix whose non-zero elements are 1 or -1.

9. The method of claim 2, wherein said transformation matrix A is a unitary matrix, and when n=4:

$$A = \frac{\sqrt{2}}{2} \times \begin{bmatrix} 1 & 0 & -1 & 0 \\ 0 & 1 & 0 & -1 \\ 1 & 0 & 1 & 0 \\ 0 & 1 & 0 & 1 \end{bmatrix}$$

10. The method of claim 2, wherein said transformation matrix A is a unitary matrix, and when n=6:

$$A = \frac{1}{2} \times \begin{bmatrix} 1 & 0 & -1 & -1 & 0 & -1 \\ 0 & 1 & -1 & 0 & -1 & 1 \\ 0 & 1 & 1 & 0 & -1 & -1 \\ 1 & -1 & 0 & 1 & -1 & 0 \\ 1 & 1 & 0 & 1 & 1 & 0 \\ 1 & 0 & 1 & -1 & 0 & 1 \end{bmatrix} \quad \text{or} \quad A = \frac{1}{2} \times \begin{bmatrix} 1 & -1 & 0 & -1 & -1 & 0 \\ 0 & 1 & -1 & 0 & -1 & 1 \\ 0 & 1 & 1 & 0 & -1 & -1 \\ 1 & 0 & -1 & 1 & 0 & -1 \\ 1 & 1 & 0 & -1 & 1 & 0 \\ 1 & 0 & 1 & 1 & 0 & 1 \end{bmatrix}$$

11. The method of claim 2, wherein said transformation matrix A is a unitary matrix, and when n=8:

$$A = \frac{1}{2} \times \begin{bmatrix} 1 & 0 & -1 & 0 & -1 & 0 & 1 & 0 \\ 0 & 1 & 0 & -1 & 0 & -1 & 0 & 1 \\ 1 & 0 & 1 & 0 & -1 & 0 & -1 & 0 \\ 0 & 1 & 0 & 1 & 0 & -1 & 0 & -1 \\ 1 & 0 & -1 & 0 & 1 & 0 & -1 & 0 \\ 0 & 1 & 0 & -1 & 0 & 1 & 0 & -1 \\ 1 & 0 & 1 & 0 & 1 & 0 & 1 & 0 \\ 0 & 1 & 0 & 1 & 0 & 1 & 0 & 1 \end{bmatrix}$$

12. The method of claim 1, wherein said diversity encoding is an encoding of a combination of spatial frequency block code and frequency switch transmission diversity, a combination of spatial time block code and time switch transmission diversity, time switch transmission diversity encoding, or frequency switch transmission diversity encoding.

13. The method of claim 1, wherein said transformation matrix A is obtained by transforming a discrete Fourier transformation matrix or by transforming a discrete Fourier transformation matrix and multiplying a non-zero coefficient k.

**Patentansprüche**

1. Verfahren für Sendediversität in einem drahtlosen Kommunikationssystem, umfassend die folgenden Schritte:

A: Modulieren einer zu sendenden Signalfolge, um eine Symbolfolge zu erzeugen, Multiplizieren eines Vektors S, der aus n Symbolen besteht, die aufeinanderfolgend aus der Symbolfolge ausgewählt sind, mithilfe einer Transformationsmatrix A, um eine Transformationsfolge X,
X = A × S zu erhalten; und
B: Diversitätscodieren von X, um einen Diversitätscodierungsblock zu erzeugen;

Zuordnen jedes Symbols im Diversitätscodierungsblock zu jeder Sendeantenne zum Senden;
wobei die Transformationsmatrix A eine invertierbare Matrix n-ter Ordnung ist, deren Elemente auf der Hauptdiagonalen ungleich null sind und deren Anzahl der von null verschiedenen Elemente in jeder Spalte größer als eins ist; n die Anzahl der Sendeantennen ist,
wobei die Transformationsmatrix A ein Produkt mehrerer Givens-Matrizen oder ein Produkt mehrerer Givens und eines von null verschiedenen Koeffizienten k ist,
**dadurch gekennzeichnet, dass**,
wenn n = 4 ist, die Transformationsmatrix A ein Produkt zweier Givens-Matrizen oder ein Produkt zweier Givens-Matrizen und eines von null verschiedenen Koeffizienten k ist; wenn n = 6 ist, die Transformationsmatrix A ein Produkt von sechs Givens-Matrizen oder ein Produkt von sechs Givens-Matrizen und einem von null verschiedenen Koeffizienten k ist; wenn n = 8 ist, die Transformationsmatrix A ein Produkt von acht Givens-Matrizen oder ein Produkt von acht Givens-Matrizen und einem von null verschiedenen Koeffizienten k ist.

2. Verfahren nach Anspruch 1, wobei die Transformationsmatrix A eine unitäre Matrix oder eine mit einem von null verschiedenen Koeffizienten k multiplizierte unitäre Matrix ist.

3. Verfahren nach Anspruch 1, wobei der Drehwinkel der Givens-Matrix n/4 ist.

4. Verfahren nach Anspruch 1, wobei jede Spalte $A_j$ der Transformationsmatrix A die folgende Bedingung erfüllt: Mindestens eines der i-ten und (i+1)-ten Elemente in $A_j$ ist ungleich null, wobei i = 1, 3,..., n-1, j = 1, 2,...n und n geradzahlig ist.

5. Verfahren nach Anspruch 1, wobei der absolute Betrag jedes von null verschiedenen Elements in derselben Spalte der Transformationsmatrix A gleich ist.

6. Verfahren nach Anspruch 5, wobei der absolute Betrag jedes von null verschiedenen Elements in der Transformationsmatrix A gleich ist.

7. Verfahren nach Anspruch 6, wobei jedes von null verschiedene Element in der Transformationsmatrix A einen Wert in einem Bereich von {d,-d} hat und d ein von null verschiedener Wert ist.

8. Verfahren nach Anspruch 7, wobei die Transformationsmatrix A als d $\times$ T angegeben wird; wobei T eine Matrix ist, deren von null verschiedenen Elemente 1 oder -1 sind.

9. Verfahren nach Anspruch 2, wobei die Transformationsmatrix A eine unitäre Matrix ist und für n = 4 gilt:

$$A = \frac{\sqrt{2}}{2} \times \begin{bmatrix} 1 & 0 & -1 & 0 \\ 0 & 1 & 0 & -1 \\ 1 & 0 & 1 & 0 \\ 0 & 1 & 0 & 1 \end{bmatrix}$$

10. Verfahren nach Anspruch 2, wobei die Transformationsmatrix A eine unitäre Matrix ist und für n = 6 gilt:

$$A = \frac{1}{2} \times \begin{bmatrix} 1 & 0 & -1 & -1 & 0 & -1 \\ 0 & 1 & -1 & 0 & -1 & 1 \\ 0 & 1 & 1 & 0 & -1 & -1 \\ 1 & -1 & 0 & 1 & -1 & 0 \\ 1 & 1 & 0 & 1 & 1 & 0 \\ 1 & 0 & 1 & -1 & 0 & 1 \end{bmatrix} \quad \text{oder} \quad A = \frac{1}{2} \times \begin{bmatrix} 1 & -1 & 0 & -1 & -1 & 0 \\ 0 & 1 & -1 & 0 & -1 & 1 \\ 0 & 1 & 1 & 0 & -1 & -1 \\ 1 & 0 & -1 & 1 & 0 & -1 \\ 1 & 1 & 0 & -1 & 1 & 0 \\ 1 & 0 & 1 & 1 & 0 & 1 \end{bmatrix}$$

11. Verfahren nach Anspruch 2, wobei die Transformationsmatrix A eine unitäre Matrix ist und für n = 8 gilt:

$$A = \frac{1}{2} \times \begin{bmatrix} 1 & 0 & -1 & 0 & -1 & 0 & 1 & 0 \\ 0 & 1 & 0 & -1 & 0 & -1 & 0 & 1 \\ 1 & 0 & 1 & 0 & -1 & 0 & -1 & 0 \\ 0 & 1 & 0 & 1 & 0 & -1 & 0 & -1 \\ 1 & 0 & -1 & 0 & 1 & 0 & -1 & 0 \\ 0 & 1 & 0 & -1 & 0 & 1 & 0 & -1 \\ 1 & 0 & 1 & 0 & 1 & 0 & 1 & 0 \\ 0 & 1 & 0 & 1 & 0 & 1 & 0 & 1 \end{bmatrix}$$

**12.** Verfahren nach Anspruch 1, wobei das Diversitätscodieren ein Codieren einer Kombination von Raum-Frequenz-Blockcode und Frequenzschalter-Sendediversität, einer Kombination von Raum-Zeit-Blockcode und Zeitschalter-Sendediversität, ein Zeitschalter-Sendediversitätscodieren oder Frequenzschalter-Sendediversitätscodieren ist.

**13.** Verfahren nach Anspruch 1, wobei die Transformationsmatrix A durch Transformieren einer Matrix für eine diskrete Fouriertransformation oder durch Transformieren einer Matrix für eine diskreten Fouriertransformation und Multiplizieren mit einem von null verschiedenen Koeffizienten k erhalten wird.

## Revendications

**1.** Procédé pour émettre en diversité dans un système de communication sans fil, comprenant:

A: moduler une séquence de signaux à émettre pour générer une séquence de symboles, multiplier un vecteur S composé de n symboles sélectionnés séquentiellement à partir de la séquence de symboles par une matrice de transformation A pour obtenir une séquence de transformation X, X = A x S; et
B: coder en diversité la X pour générer un bloc de codage en diversité; affecter chaque symbole dans le bloc de codage en diversité à chaque antenne d'émission pour une émission;

la matrice de transformation A étant une matrice pouvant être inversée d'ordre n dont les éléments diagonaux principaux ne sont pas nuls, et le nombre d'éléments non nuls dans chaque colonne étant supérieur à un; n étant le nombre des antennes d'émission,
ladite matrice de transformation A étant un produit de plusieurs matrices Givens ou un produit de plusieurs Givens et d'un coefficient non nul k,
**caractérisé en ce que**,
lorsque n = 4, ladite matrice de transformation A est un produit de deux matrices Givens ou un produit de deux matrices Givens et d'un coefficient non nul k; lorsque n = 6, ladite matrice de transformation A est un produit de six matrices Givens ou un produit de six matrices Givens et d'un coefficient non nul k; et lorsque n = 8, ladite matrice de transformation A est un produit de huit matrices Givens ou un produit de huit matrices Givens et d'un coefficient non nul k.

**2.** Procédé selon la revendication 1, dans lequel ladite matrice de transformation A est une matrice unitaire, ou une matrice unitaire multipliée par un coefficient non nul k.

**3.** Procédé selon la revendication 1, dans lequel un degré de rotation de ladite matrice Givens est n/4.

**4.** Procédé selon la revendication 1, dans lequel toute colonne $A_j$ de ladite matrice de transformation A satisfait la condition suivante: au moins l'un des $i^{ième}$ et $(i+1)^{ième}$ éléments dans $A_j$ n'est pas nul, où i = 1, 3, ..., n-1, j = 1, 2, ..., n, et n est pair.

**5.** Procédé selon la revendication 1, dans lequel un module de chaque élément non nul dans la même colonne de ladite matrice de transformation A est le même.

**6.** Procédé selon la revendication 5, dans lequel un module de chaque élément non nul dans ladite matrice de transformation A est le même.

7. Procédé selon la revendication 6, dans lequel chaque élément non nul dans ladite matrice de transformation A a une valeur dans une plage de {d, -d}, et d est une valeur non nulle.

8. Procédé selon la revendication 7, dans lequel ladite matrice de transformation A est indiquée comme d x T; où T est une matrice dont les éléments non nuls sont 1 ou -1.

9. Procédé selon la revendication 2, dans lequel ladite matrice de transformation A est une matrice unitaire, et lorsque n = 4:

$$A = \frac{\sqrt{2}}{2} \times \begin{bmatrix} 1 & 0 & -1 & 0 \\ 0 & 1 & 0 & -1 \\ 1 & 0 & 1 & 0 \\ 0 & 1 & 0 & 1 \end{bmatrix}.$$

10. Procédé selon la revendication 2, dans lequel ladite matrice de transformation A est une matrice unitaire, et lorsque n = 6:

$$A = \frac{1}{2} \times \begin{bmatrix} 1 & 0 & -1 & -1 & 0 & -1 \\ 0 & 1 & -1 & 0 & -1 & 1 \\ 0 & 1 & 1 & 0 & -1 & -1 \\ 1 & -1 & 0 & 1 & -1 & 0 \\ 1 & 1 & 0 & 1 & 1 & 0 \\ 1 & 0 & 1 & -1 & 0 & 1 \end{bmatrix} \text{ ou } A = \frac{1}{2} \times \begin{bmatrix} 1 & -1 & 0 & -1 & -1 & 0 \\ 0 & 1 & -1 & 0 & -1 & 1 \\ 0 & 1 & 1 & 0 & -1 & -1 \\ 1 & 0 & -1 & 1 & 0 & -1 \\ 1 & 1 & 0 & -1 & 1 & 0 \\ 1 & 0 & 1 & 1 & 0 & 1 \end{bmatrix}.$$

11. Procédé selon la revendication 2, dans lequel ladite matrice de transformation A est une matrice unitaire, et lorsque n = 8:

$$A = \frac{1}{2} \times \begin{bmatrix} 1 & 0 & -1 & 0 & -1 & 0 & 1 & 0 \\ 0 & 1 & 0 & -1 & 0 & -1 & 0 & 1 \\ 1 & 0 & 1 & 0 & -1 & 0 & -1 & 0 \\ 0 & 1 & 0 & 1 & 0 & -1 & 0 & -1 \\ 1 & 0 & -1 & 0 & 1 & 0 & -1 & 0 \\ 0 & 1 & 0 & -1 & 0 & 1 & 0 & -1 \\ 1 & 0 & 1 & 0 & 1 & 0 & 1 & 0 \\ 0 & 1 & 0 & 1 & 0 & 1 & 0 & 1 \end{bmatrix}.$$

12. Procédé selon la revendication 1, dans lequel ledit codage en diversité est un codage d'une combinaison de code de bloc de fréquence spatiale et de diversité d'émission de commutateur de fréquence, une combinaison de code de bloc de temps spatial et de diversité d'émission de commutateur de temps, un codage en diversité d'émission de commutateur de temps, ou un codage en diversité d'émission de commutateur de fréquence.

13. Procédé selon la revendication 1, dans lequel ladite matrice de transformation A est obtenue par transformation d'une matrice de transformation de Fourier discrète ou par transformation d'une matrice de transformation de Fourier discrète et multiplication par un coefficient non nul k.

Modulate the to-be-transmitted binary signal sequence to generate the symbol sequence S

/⁻ 101

Encode in diversity the symbol sequence S to acquire the diversity encoding block

/⁻ 102

Assign each symbol in the diversity encoding block to each antenna to transmit

/⁻ 103

FIG. 1

Binary sequence → Modulate the binary sequence → S=[S1,S2,S3,S4]ᵀ → Encode S with the SFBC+FSTD diversity encoding method → Diversity encoding block → Assign each symbol in the encoding block to each transmission antenna to transmit

FIG. 2

|  | A1 | A2 | A3 | A4 |
|---|---|---|---|---|
| F1 | S1 | S2 | | |
| F2 | -S2* | S1* | | |
| F3 | | | S3 | S4 |
| F4 | | | -S4* | S3* |

FIG. 3

```
┌─────────────────────────┐
│ Modulate the to-be-transmitted │─── 201
│ binary signal sequence to │
│ generate the symbol sequence S │
└─────────────────────────┘
            │
            ▼
┌─────────────────────────┐
│ Transform the symbol sequence │─── 202
│ S to generate the transformation │
│ sequence X │
└─────────────────────────┘
            │
            ▼
┌─────────────────────────┐
│ Encode in diversity the │─── 203
│ transformation sequence X to │
│ acquire the diversity encoding │
│ block │
└─────────────────────────┘
            │
            ▼
┌─────────────────────────┐
│ Assign each symbol in the │─── 204
│ diversity encoding block to │
│ each antenna to transmit │
└─────────────────────────┘
```

## FIG. 4

Binary sequence → Modulate the binary sequence → $S=[S_1,S_2,S_3,S_4]^T$ → $X=A \times S$ → $X=[X_1,X_2,X_3,X_4]^T$ → Encode in diversity X with the SFBC+FSTD diversity encoding method → Diversity encoding block → Assign each symbol in the encoding block to each transmission antenna to transmit → △ △ △ △

## FIG. 5

|    | A1 | A2 | A3 | A4 |
|----|----|----|----|----|
| F1 | $X_1=\dfrac{\sqrt{2}}{2}(S_1-S_3)$ | $X_2=\dfrac{\sqrt{2}}{2}(S_2-S_4)$ | | |
| F2 | $-X_2^*=-\dfrac{\sqrt{2}}{2}(S_2-S_4)^*$ | $X_1^*=\dfrac{\sqrt{2}}{2}(S_1-S_3)^*$ | | |
| F3 | | | $X_3=\dfrac{\sqrt{2}}{2}(S_1+S_3)$ | $X_4=\dfrac{\sqrt{2}}{2}(S_2+S_4)$ |
| F4 | | | $-X_4^*=-\dfrac{\sqrt{2}}{2}(S_2+S_4)^*$ | $X_3^*=\dfrac{\sqrt{2}}{2}(S_1+S_3)^*$ |

## FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1679816 A1
- US 2006291544 A1, FISCHER MATTHEW J [US] ET AL FISCHER MATTHEW JAMES [US]
- US 20061228 A1

**Non-patent literature cited in the description**

- A New Hybrid Space-Time Block Codes and Spatial Multiplexing Scheme with Precoding. **D1 J-K KIM et al.** PROCEEDINGS OF THE 2007 IEEE INTERNATIONAL CONFERFRENCE ON COMMUNICATIONS (ICC 2007). IEEE, 01 June 2007, 5276-5281
- Way Forward on 4-Tx Codebook for dual polarized SU-MIMO. **SAMSUNG et al.** 3GPP DRAFT; R1-073201, 3RD GENERATION PARTNERSHIP PROJECT (3GPP). MOBILE COMPETENCE CENTRE, 02 July 2007
- MIMO precoding for E-UTRADowlink. **SAMSUNG.** 3GPP DRAFT; R1-070944, 3RD GENERATION PARTNERSHIP PROJECT (3GPP). MOBILE COMPETENCE CENTRE, 06 February 2007
- DI 4*2 Rate 1 Double STTD schemes comparison. **NORTEL.** 3GPP DRAFT; R1-060148, 3RD GENERATION PARTNERSHIP PROJECT (3GPP). MOBILE COMPETENCE CENTRE, 19 January 2006